# EUROPÄISCHE PATENTANMELDUNG

(11) **EP 4 707 567 A1**
(43) Veröffentlichungstag der Anmeldung: **11.03.2026**
(21) Anmeldenummer: 25195688.4
(22) Anmeldetag: 13.08.2025
(51) Int. Cl.: F02C 7/22, F01D 25/32

(54) **KRAFTSTOFFSYSTEM FÜR EIN GASTURBINENTRIEBWERK UND GASTURBINENTRIEBWERK**

(30) Priorität: 09.09.2024 DE 102024125769
(71) Anmelder: Rolls-Royce Deutschland Ltd & Co KG, 15827 Blankenfelde-Mahlow (DE)
(72) Erfinder: JÄGER, Thomas, 15827 Blankenfelde-Mahlow (DE); BLUMRICH, Markus, 15827 Blankenfelde-Mahlow (DE)

(57) **Zusammenfassung**

Es wird ein Kraftstoffsystem (1) für ein Gasturbinentriebwerk, insbesondere für ein Flugtriebwerk, und ein Gasturbinentriebwerk mit einer Kraftstoffleitung (2) vorgeschlagen, die einen Kraftstofftank (3) mit wenigstens einer Förderpumpe (4) und mit einem Kraftstofffilter (5) verbindet. Der Kraftstofffilter (5) ist stromab der Förderpumpe (4) angeordnet und über die Kraftstoffleitung (2) mit einer Druckseite (6) der Förderpumpe (4) sowie mit einer Brennkammer (7) verbunden. Weiterhin zweigt eine Rücklaufleitung (8) von der Brennkammer (7) in Richtung eines Rücklaufbehälters (9) ab. Eine Saugaufladungsleitung (11) verbindet die die Druckseite (6) der Förderpumpe (4) mit einer Saugseite (12) der Förderpumpe (4). Der Rücklaufbehälter (9) steht über eine Entleereinheit (13) mit der Saugaufladungsleitung (11) in Wirkverbindung. Die Entleereinheit (13) ist dazu eingerichtet, Kraftstoff aus dem Rücklaufbehälter (9) in die Saugaufladungsleitung (11) zu führen. Die Saugaufladungsleitung (11) zweigt vom Kraftstofffilter (5) in Richtung der Saugseite (12) der Förderpumpe (4) ab und Kraftstoff ist aus einem Innenraum (18) eines Filtergehäuses (19) des Kraftstofffilters (5) in die Saugaufladungsleitung (11) einleitbar.

## Beschreibung

Die vorliegende Offenbarung betrifft ein Kraftstoffsystem für ein Gasturbinentriebwerk sowie ein Gasturbinentriebwerk.

Die US 6 371 087 B1 betrifft ein Kraftstofffilter-Ablasssystem, das kontinuierlich gefiltertes Wasser aus einem Kraftstofffilter eines Lokomotivdieselmotors abpumpt. Das System umfasst des Weiteren eine Ablasseinheit, die am Boden einer Endkappe neben einem Wassersammelbereich im Kraftstofffilter angeordnet ist. Durch die ausreichende Druckdifferenz im Filtersystem wird das Wasser aus dem Kraftstofffilter gedrückt.

Eine Vorrichtung und ein Verfahren zur mehrstufigen Wasserabscheidung und Kraftstofffiltration sind aus der US 7 527 739 B2 bekannt. Die Vorrichtung umfasst zwei Sedimentationskammern zum Sammeln der Wassertröpfchen aus dem Kraftstoff, eine Ablassöffnung am distalen Ende zum Ablassen der in der Sedimentationskammer vorhandenen Wassertröpfchen und eine Zugfeder, die das gesammelte Wasser bei Kompression aus der Ablassöffnung freigibt.

Darüber hinaus offenbart die CN 110 397 530 B ein Entwässerungssystem und ein Entwässerungsverfahren für einen Motorkraftstofffilter. Das Entwässerungssystem umfasst einen mit einem Wasserauslass versehenen Becherkörper und eine auf dem Becherkörper angeordnete Ventilanordnung. Das System umfasst auch eine Luftkompressoranordnung, die die Ventilanordnung zum Öffnen des Wasserauslasses antreibt.

Zusätzlich weist ein aus der Praxis bekanntes Gasturbinentriebwerk für Flugzeuge ein Kraftstoffsystem mit einer Kraftstoffleitung auf. Die Kraftstoffleitung verbindet einen Kraftstofftank mit wenigstens einer Förderpumpe und mit einem Kraftstofffilter, der mit einer Druckseite der Förderpumpe verbunden und stromab der Förderpumpe angeordnet ist. Im Bereich des Kraftstofffilters werden Schmutzpartikel aus dem Kraftstoff gefiltert. Weiterhin verbindet die Kraftstoffleitung den Kraftstofffilter stromab fluidisch mit einer Brennkammer. Die Brennkammer wird über eine Rücklaufleitung mit einem Rücklaufbehälter verbunden, wenn das Gasturbinentriebwerk abgeschaltet wird. Dann wird die Kraftstoffleitung durch den Druck im Brennraum in Richtung des Rücklaufbehälters entleert. Zusätzlich ist eine Saugaufladungsleitung vorgesehen, die die Druckseite der Förderpumpe stromauf oder stromab des Kraftstofffilters mit einer Saugseite der Förderpumpe verbindet. Der Rücklaufbehälter steht über eine Entleereinheit mit der Saugaufladungsleitung in Wirkverbindung. Die Entleereinheit ist dazu eingerichtet, zum Entleeren des Rücklaufbehälters Kraftstoff aus dem Rücklaufbehälter in die Saugaufladungsleitung zu führen.

Das im Kraftstoff mitgeführte Wasser wird im Kraftstofffilter zumindest teilweise abgeschieden und sammelt sich aufgrund der im Vergleich zur Dichte des Kraftstoffs höheren Dichte im unteren Bereich des Kraftstofffilters an. Problematisch ist hierbei, dass bei Betriebstemperaturen im Bereich des Kraftstofffilters unter 0 °C das im Kraftstofffilter angesammelte Wasservolumen im Kraftstofffilter gefriert und die Kapazität des Kraftstofffilters herabsetzt bzw. den Kraftstofffilter vollständig zusetzt.

Zudem besteht die Möglichkeit, dass das im Kraftstofffilter angesammelte Wasser spontan aus dem Kraftstofffilter ausgespült wird und im Bereich von stromab des Kraftstofffilters in der Kraftstoffleitung angeordneten Elementen gefriert und eine Kraftstoffversorgung beeinträchtigt.

Der vorliegenden Offenbarung liegt die Aufgabe zugrunde ein Kraftstoffsystem sowie ein Gasturbinentriebwerk zu schaffen, bei welchen unerwünscht große Wasseransammlungen im Kraftstoffsystem auf konstruktiv einfache und kostengünstige Art und Weise vermieden werden.

Diese Aufgabe wird mit einem Kraftstoffsystem sowie mit einem Gasturbinentriebwerk mit den Merkmalen des Patentanspruches 1 bzw. 12 gelöst.

Das Kraftstoffsystem für ein Gasturbinentriebwerk, insbesondere für ein Flugtriebwerk, gemäß der vorliegenden Offenbarung umfasst eine Kraftstoffleitung. Die Kraftstoffleitung verbindet einen Kraftstofftank mit wenigstens einer Förderpumpe und mit einem Kraftstofffilter. Der Kraftstofffilter ist stromab der Förderpumpe angeordnet und mit einer Druckseite der Förderpumpe verbunden. Darüber hinaus verbindet die Kraftstoffleitung den Kraftstofffilter mit einer Brennkammer. Eine Rücklaufleitung zweigt von der Brennkammer in Richtung eines Rücklaufbehälters ab. Eine Saugaufladungsleitung verbindet die Druckseite der Förderpumpe mit einer Saugseite der Förderpumpe. Der Rücklaufbehälter steht über eine Entleereinheit mit der Saugaufladungsleitung in Wirkverbindung, wobei die Entleereinheit dazu eingerichtet ist, Kraftstoff aus dem Rücklaufbehälter in die Saugaufladungsleitung zu führen.

Da die Saugaufladungsleitung vom Kraftstofffilter in Richtung der Saugseite der Förderpumpe abzweigt und Kraftstoff aus einem Innenraum eines Filtergehäuses des Kraftstofffilters in die Saugaufladungsleitung einleitbar ist, wird das Filtergehäuse im Betrieb des Kraftstoffsystems ausgehend von der Druckseite der Förderpumpe in Richtung der Saugaufladungsleitung von durch die Förderpumpe gefördertem Kraftstoff permanent in Richtung der Saugseite der Förderpumpe durchströmt. Dadurch werden im Kraftstofffilter mit geringem konstruktivem Aufwand und somit auf einfache und kostengünstige Art und Weise größere Wasseransammlungen vermieden, die bei herkömmlichen Lösungen die bekannten Probleme im Bereich eines Kraftstofffilters und auch stromab des Kraftstofffilters verursachen.

Bei einer vorteilhaften Weiterbildung des Kraftstoffsystems gemäß der vorliegenden Offenbarung zweigt die Saugaufladungsleitung in Einbaulage des Kraftstofffilters Filters von einem unteren Bereich des Filtergehäuses ab. Dadurch kann ein im Filtergehäuse angesammeltes Wasservolumen auf konstruktiv einfache Art und Weise auf ein Minimum beschränkt werden.

Wenn die Saugaufladungsleitung durch ein unteres Deckelement hindurch mit dem Innenraum des Filtergehäuses in Verbindung steht, werden Wasseransammlungen begünstigende Totwassergebiete im Innenraum des Filtergehäuses mit geringem Aufwand vermieden.

Alternativ hierzu kann die Saugaufladungsleitung auch durch eine Seitenwand des Kraftstofffilters hindurch mit dem Innenraum des Filtergehäuses in Verbindung stehen, um im Betrieb des Kraftstoffsystems den Innenraum des Kraftstofffilters ausgehend von der Druckseite der Förderpumpe mit Kraftstoff in Richtung der Saugaufladungsleitung und damit der Saugseite der Förderpumpe zu spülen.

Stromauf einer Öffnung des Filtergehäuses, die den Innenraum des Filtergehäuses mit der Saugaufladungsleitung verbindet, kann eine Rückhalteeinheit angeordnet sein, in deren Bereich Schmutzpartikel im Filtergehäuse zurückgehalten werden. Dadurch wird mit geringem Aufwand erreicht, dass Schmutzpartikel nicht im Kraftstoffsystem zirkulieren und die Funktion von gegenüber Schmutzpartikel sensitiven Bauteilen eines Gasturbinentriebwerkes nicht beeinträchtigt wird.

Die Rückhalteeinrichtung kann eine Prallwand umfassen, die im Strömungsweg zwischen dem Inneren des Filtergehäuses und der Saugaufladungsleitung sowie stromauf der Öffnung des Filtergehäuses angeordnet ist und in deren Bereich im Kraftstoff mitgeführte Schmutzpartikel mit geringem Aufwand abgeschieden werden.

Zusätzlich hierzu oder alternativ dazu kann es vorgesehen sein, dass die Rückhalteeinrichtung ein Filterelement umfasst, das im Bereich der Öffnung des Filtergehäuses angeordnet ist und von dem Kraftstoff, der aus dem Innenraum des Kraftstofffiltern in die Saugaufladungsleitung geführt wird, durchströmt wird und mit dem Kraftstoff mitgeführte Schmutzpartikel zurückhält.

Im Rücklaufbehälter kann ein Schwimmerelement der Entleereinheit angeordnet sein, das eine den Rücklaufbehälter mit der Saugaufladungsleitung verbindende Entleerleitung unterhalb eines definierten Kraftstoff-Füllstandes des Rücklaufbehälters sperrt. Dadurch wird auf einfache Art und Weise das Ansaugen von Luft aus dem Rücklaufbehälter vermieden.

Bei einer zumindest bereichsweise im Wesentlichen verschleißfrei betreibbaren Ausführungsform des Kraftstoffsystems gemäß der vorliegenden Offenbarung ist in der Saugaufladungsleitung eine Strahlpumpe der Entleereinheit angeordnet. Die Strahlpumpe kann über eine Entleerleitung mit dem Rücklaufbehälter in Verbindung stehen. Dabei besteht die Möglichkeit, dass der im Betrieb des Kraftstoffsystems durch die Saugaufladungsleitung geführte Kraftstoff das Treibmedium der Strahlpumpe und der im Rücklaufbehälter gespeicherte Kraftstoff das Saugmedium der Strahlpumpe bildet.

Die Entleereinheit kann ein Rückschlagventil aufweisen, dass die Verbindung zwischen dem Rücklaufbehälter und der Strahlpumpe sperrt, wenn der Druck im Rücklaufbehälter den Saugdruck der Strahlpumpe unterschreitet. Dadurch wird während ungünstiger Betriebszustandsverläufe des Kraftstoffsystems ohne zusätzlichen Steuer- und Regelaufwand vermieden, dass Kraftstoff aus der Saugaufladungsleitung in Richtung des Rücklaufbehälters geführt wird.

Die Rücklaufleitung kann in einem der Brennkammer nahen Leitungsbereich eine Ventileinheit aufweisen, über die eine Verbindung zwischen der Brennkammer und dem Rücklaufbehälter schaltbar ist.

Ein weiterer Aspekt der vorliegenden Offenbarung betrifft ein Gasturbinentriebwerk, das mit einem vorstehend näher beschriebenen Kraftstoffsystem ausgeführt ist.

Die Erfindung ist nicht auf die angegebenen Kombinationen der Merkmale der unabhängigen Ansprüche oder der hiervon abhängigen Ansprüche beschränkt. Es ergeben sich im Rahmen der Ansprüche darüber hinaus Möglichkeiten, einzelne Merkmale, soweit sie aus den Ansprüchen, der nachfolgenden Beschreibung von Ausführungsformen oder unmittelbar aus der Zeichnung hervorgehen, miteinander zu kombinieren. Die Bezugnahme der Ansprüche auf die Zeichnungen durch die Verwendung von Bezugszeichen soll den Schutzumfang der Ansprüche nicht beschränken.

Bevorzugte Weiterbildungen ergeben sich aus den Unteransprüchen und der nachfolgenden Beschreibung. Ausführungsbeispiele der Erfindung werden ohne hierauf beschränkt zu sein, anhand der Zeichnung näher erläutert.

Es zeigt:
- Fig. 1: eine stark vereinfachte Teildarstellung einer ersten Ausführungsform eines Kraftstoffsystems eines Gasturbinentriebwerkes;
- Fig. 2: eine weitere Teildarstellung des Kraftstoffsystems gemäß Fig. 1;
- Fig. 3: eine schematische Teilschnittansicht einer ersten Ausführungsform eines Kraftstofffilters des Kraftstoffsystems gemäß Fig. 1;
- Fig. 4: eine Fig. 3 entsprechende Darstellung einer zweiten Ausführungsform des Kraftstofffilters des Kraftstoffsystems gemäß Fig. 1;
- Fig. 5: eine Fig. 1 entsprechende Darstellung einer zweiten Ausführungsform des Kraftstoffsystems;
- Fig. 6: eine Fig. 3 entsprechende Darstellung einer ersten Ausführungsform des Kraftstofffilters des Kraftstoffsystems gemäß Fig. 5;
- Fig. 7: eine Fig. 6 entsprechende Darstellung einer zweiten Ausführungsform des Kraftstofffilters des Kraftstoffsystems gemäß Fig. 5; und
- Fig. 8: eine vereinfachte Schnittansicht einer weiteren Ausführungsform des Kraftstofffilters.

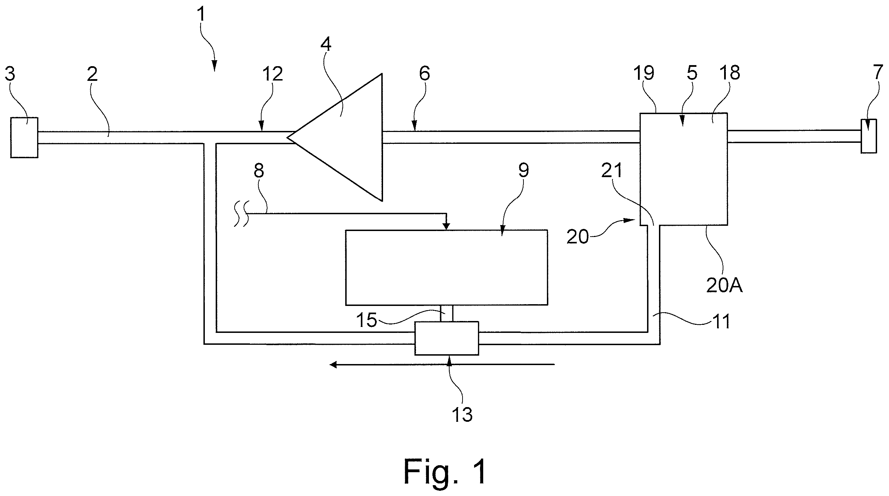

Fig. 1 zeigt eine vereinfachte Teildarstellung eines Kraftstoffsystems 1 eines Gasturbinentriebwerks, insbesondere eines Gasturbinentriebwerks eines Flugzeugs. Eine Kraftstoffleitung 2 des Kraftstoffsystems 1 verbindet einen Kraftstofftank 3 mit einer Förderpumpe 4 und mit einem Kraftstofffilter 5, der stromab der Förderpumpe 4 angeordnet und mit einer Druckseite 6 der Förderpumpe 4 verbunden ist. Im Betrieb des Kraftstoffsystems 1 strömt Kraftstoff stromab der Förderpumpe 4 in den Kraftstofffilter 5 ein, wobei im Kraftstofffilter 5 Schmutzpartikel aus dem Kraftstoff abgeschieden werden.

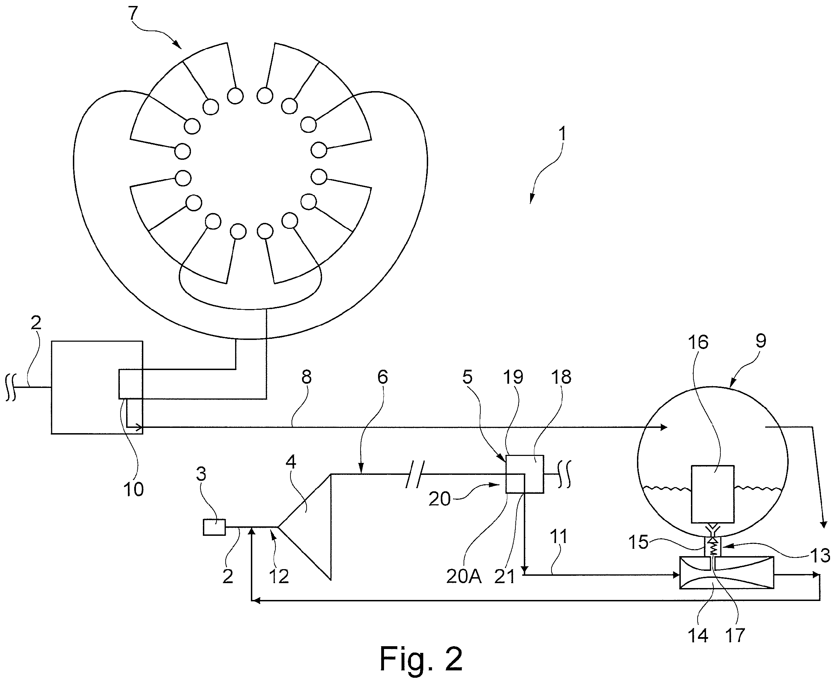

Weiterhin verbindet die Kraftstoffleitung 2 den Kraftstofffilter 5 fluidisch mit einer stromab des Kraftstofffilters 5 angeordneten und in Fig. 2 näher dargestellten Brennkammer 7, der über die Kraftstoffleitung 2 der im Kraftstofffilter 5 gereinigte Kraftstoff zugeführt wird. Die Brennkammer 7 wird über eine Rücklaufleitung 8 mit einem Rücklaufbehälter 9 verbunden, wenn das Gasturbinentriebwerk und die Förderpumpe 4 abgeschaltet werden. Dann wird die Kraftstoffleitung 2 über den Druck in der Brennkammer 7 in Richtung des Rücklaufbehälters 9 entleert, der dabei entsprechend mit Kraftstoff befüllt wird. Hierfür ist in einem der Brennkammer 7 nahen Leitungsbereich der Rücklaufleitung 8 eine Ventileinheit 10 vorgesehen, über die die Verbindung zwischen der Brennkammer 7 und dem Rücklaufbehälter 9 schaltbar ist.

Zusätzlich ist eine Saugaufladungsleitung 11 vorgesehen, über die die Druckseite 6 der Förderpumpe 4 mit einer Saugseite 12 der Förderpumpe 4 in Verbindung steht. Dabei zweigt die Saugaufladungsleitung 11 vom Kraftstofffilter 5 und damit von der Kraftstoffleitung 2 in Richtung der Saugseite 12 der Förderpumpe 4 ab. Der Rücklaufbehälter 9 steht über eine Entleereinheit 13 mit der Saugaufladungsleitung 11 in Wirkverbindung. Die Entleereinheit 13 ist dazu eingerichtet, zum Entleeren des Rücklaufbehälters 9 Kraftstoff aus dem Rücklaufbehälter 9 in die Saugaufladungsleitung 11 zu führen. Hierfür umfasst die Entleereinheit 13 eine Strahlpumpe 14, die in der Saugaufladungsleitung 11 angeordnet ist und im Betrieb des Kraftstoffsystems 1 ausgehend vom Kraftstofffilter 5 in Richtung der Saugseite 12 der Förderpumpe 4 mit dem Kraftstoff durchströmt wird, der durch die Saugaufladungsleitung 11 geführt wird. Damit stellt der die Saugaufladungsleitung 11 durchströmende Kraftstoff das Treibmittel der Strahlpumpe 14 dar.

Zwischen dem Rücklaufbehälter 9 und der Strahlpumpe 14 der Entleereinheit 13 verläuft eine Entleerleitung 15, über die im Rücklaufbehälter 9 gespeicherter Kraftstoff, der das Saugmedium der Strahlpumpe 14 darstellt, von der Strahlpumpe 14 absaugbar ist. Um das Ansaugen von Luft aus dem Rücklaufbehälter 9 zu vermeiden, ist im Rücklaufbehälter 9 ein Schwimmerelement 16 der Entleereinheit 13 angeordnet. Das Schwimmerelement 16 sperrt die Entleerleitung 13 unterhalb eines definierten Kraftstoff-Füllstandes des Rücklaufbehälters 9 und gibt die Entleerleitung 13 oberhalb des Kraftstoff-Füllstandes frei.

Des Weiteren ist die Entleereinheit 13 mit einem Rückschlagventil 17 ausgebildet, das die Verbindung zwischen dem Rücklaufbehälter 9 und der Strahlpumpe 14 sperrt, wenn der Druck im Rücklaufbehälter 9 den Saugdruck der Strahlpumpe unterschreitet. Dadurch wird während ungünstiger Betriebszustandsverläufe des Kraftstoffsystems 1 ohne zusätzlichen Steuer- und Regelaufwand vermieden, dass Kraftstoff aus der Saugaufladungsleitung 11 in Richtung des Rücklaufbehälters 9 geführt wird.

Neben Schmutzpartikeln scheidet sich auch im Kraftstoff mitgeführtes Wasser im Kraftstofffilter 5 zumindest teilweise ab und tendiert aufgrund der im Vergleich zur Dichte des Kraftstoffs höheren Dichte dazu, sich im unteren Bereich des Kraftstofffilters 5 anzureichern. Im Betrieb des Kraftstoffsystems 1 wird Kraftstoff nicht nur in Richtung der Brennkammer 7 aus einem Innenraum 18 eines Filtergehäuses 19 des Kraftstofffilters 5 geführt, sondern auch in einem unteren Bereich 20 des Kraftstofffilters 5 Kraftstoff in die Saugaufladungsleitung 11 eingeleitet. Dadurch wird das Filtergehäuse 19 im Betrieb des Kraftstoffsystems 1 durchgehend von der Druckseite 6 der Förderpumpe 4 mit von der Förderpumpe 4 gefördertem Kraftstoff in Richtung der Saugseite 12 der Förderpumpe 4 durchströmt und im Kraftstofffilter 5 aus dem Kraftstoff abgeschiedenes Wasser in Richtung der Saugseite 12 ausgespült.

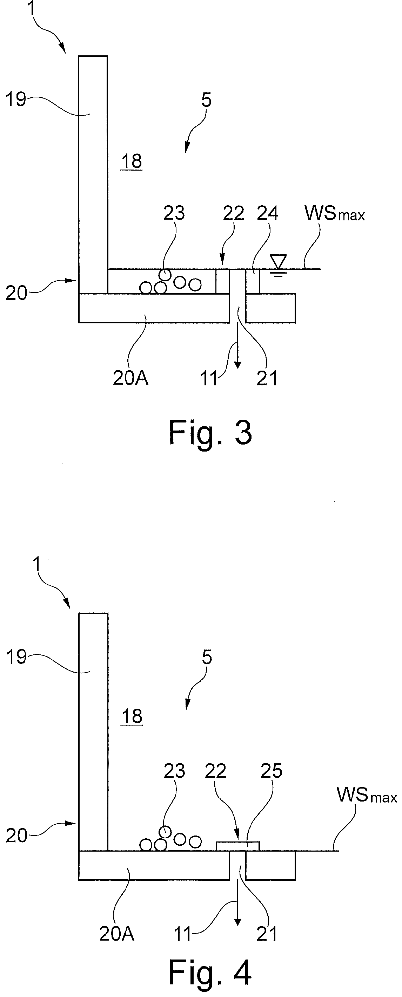

Dabei besteht die Möglichkeit, dass ein Mündungsbereich 11A der Saugaufladungsleitung 11 in der in Fig. 3 und Fig. 4 dargestellten Art und Weise in Einbaulage des Kraftstofffilters 5 in einem unteren Deckelelement 20A eines unteren Bereiches 20 des Filtergehäuses 19 angeordnet ist. Dadurch wird erreicht, dass ein Volumen eines sogenannten Totwasserbereiches im Innenraum 18 minimal ist. Der Totwasserbereich wird konstruktionsbedingt im Betrieb des Kraftstoffsystems 1 von der Spülströmung nicht erfasst. Somit sammelt sich im Filtergehäuse 19 lediglich ein geringes Wasservolumen an, das die Funktion des Kraftstofffilters 5 und des Kraftstoffsystems 1 nicht beeinträchtigt.

Stromauf einer Öffnung 21 des Filtergehäuses 19, die den Innenraum 18 des Filtergehäuses 19 mit der Saugaufladungsleitung 11 verbindet, ist eine Rückhalteeinheit 22 angeordnet. Im Bereich der Rückhalteeinheit 22 werden im Filtergehäuse 19 Schmutzpartikel 23 zurückgehalten. Bei der in Fig. 3 dargestellten Ausführungsform der Rückhalteeinheit 23 umfasst diese eine die Öffnung 21 umgebende Prallwand 24, die im Strömungsweg zwischen dem Innenraum 18 des Filtergehäuses 19 und der Saugaufladungsleitung 11 sowie stromauf der Öffnung 21 des Filtergehäuses 19 angeordnet ist und in deren Bereich im Kraftstoff mitgeführte Schmutzpartikel 23 abgeschieden werden. Durch die Prallwand 24 stellt sich im Innenraum 18 ein maximaler Wasserfüllstand WSmax ein.

Die in Fig. 4 dargestellte Ausführungsform der Rückhalteeinheit 22 ist mit einem Filterelement 25 ausgebildet, das im Bereich der Öffnung 21 des Filtergehäuses 19 angeordnet ist. Das Filterelement 25 wird von dem Kraftstoff durchströmt, der aus dem Innenraum 18 des Kraftstofffilters 5 in die Saugaufladungsleitung 11 geführt wird, und hält Schmutzpartikel 23 zurück, die vom Kraftstoff in den Kraftstofffilter 5 eingeleitet werden. Durch das Filterelement 25 ist der maximale Wasserfüllstand WSmax im Innenraum 18 wesentlichen niedriger als bei der Ausführung des Kraftstofffilters 5 gemäß Fig. 3.

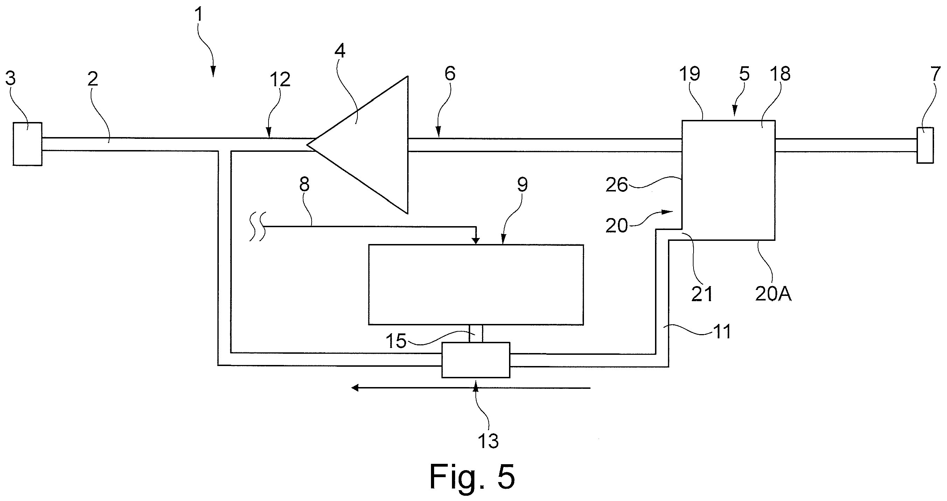

Fig. 5 zeigt eine weitere Ausführungsform des Kraftstoffsystems 1, bei dem die Saugaufladungsleitung 11 an eine Seitenwand 26 des Kraftstofffilters 5 angebunden. Die Öffnung 21 ist knapp oberhalb des Deckelementes 20A in der Seitenwand 26 vorgesehen und stellt eine Verbindung zwischen dem Innenraum 18 des Filtergehäuses19 und der Saugaufladungsleitung 11 her.

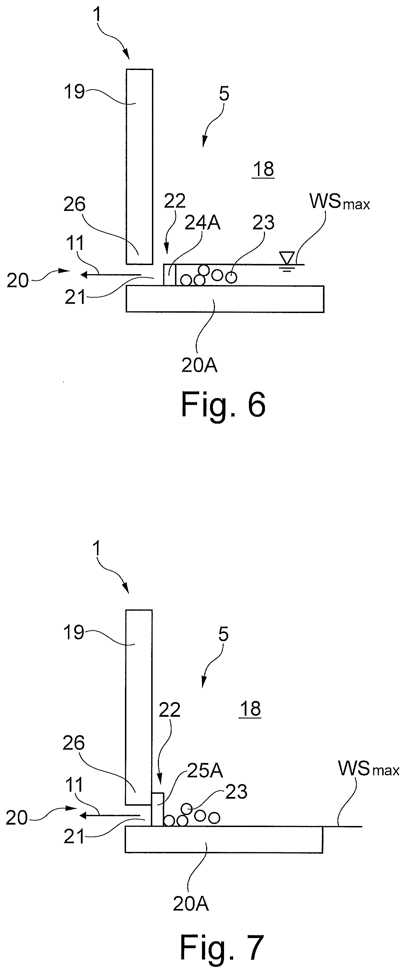

Dabei besteht die Möglichkeit, dass die Rückhalteeinheit 22 wie in Fig. 6 gezeigt mit einer Prallwand 24A oder wie in Fig. 7 dargestellt mit einem Filterelement 25A ausgeführt ist, um die Schmutzpartikel 23 im Innenraum 18 vor dem Eintritt in die Saugaufladungsleitung 11 aus dem Kraftstoff abscheiden zu können.

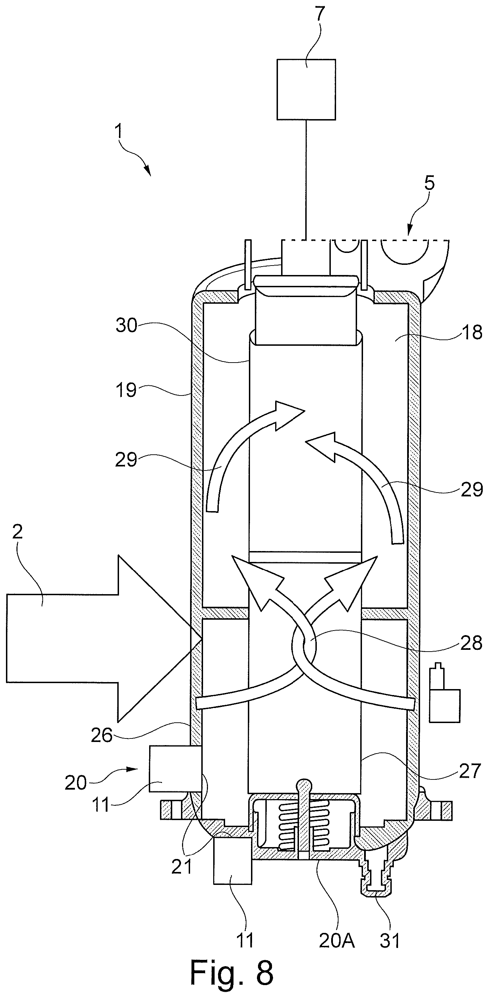

Eine weitere Ausführungsform des Kraftstofffilters 5 ist in Fig. 8 dargestellt, bei der der Kraftstoff oberhalb der Öffnung 21 durch die Seitenwand 26 in den Innenraum 18 des Filtergehäuses 19 eingeleitet wird. Im Innenraum 18 durchströmt ein Teil des eingeleiteten Kraftstoffvolumens ein Filtermedium 27 den Pfeilen 28 entsprechend zunächst von außen nach innen und anschließend von innen nach außen. Im Anschluss daran durchströmt dieser Anteil des Kraftstoffs den Pfeilen 29 entsprechend ein weiteres Filtermedium 30 von außen nach innen und wird anschließend aus dem Kraftstofffilter 5 in Richtung der Brennkammer 7 ausgeleitet. Der andere Teil des in den Innenraum 18 eingeleiteten Kraftstoffvolumens strömt über die Öffnung 21 entweder seitlich oder nach unten in die Saugaufladungsleitung 11 ab. Zudem ist der Kraftstofffilter 5 gemäß Fig. 8 mit einer Ablassschraube 31 ausgebildet, über die im Wartungsfall im Kraftstofffilter 5 befindlicher Kraftstoff mit geringem Aufwand abgelassen werden kann.

Die Förderpumpe 4 kann als eine Niederdruckpumpe ausgeführt sein, die in der Kraftstoffleitung 2 einer als Hochdruckpumpe ausgebildeten weiteren Förderpumpe vorgeschaltet ist. Über die Hochdruckpumpe wird der Brennkammer 7 Kraftstoff mit einem Druck zugeführt, der eine effiziente Verbrennung ermöglicht. Bei einer solchen Ausführungsform des Kraftstoffsystems 1 wird über die Förderpumpe 4 ein Druckverlust im Bereich des Kraftstofffilters 5 ausgeglichen, um die Hochdruckpumpe mit Eingangsdrücken größer als eine definierte Druckschwelle beaufschlagen zu können. Dadurch wird Kavitation im Bereich der Hochdruckpumpe auf einfache Art und Weise vermeiden.

Wenn der Hochdruckpumpe in der gleichen Art und Weise wie der der Förderpumpe 4 ein weiterer Kraftstofffilter nachgeschaltet ist, kann der weitere Kraftstofffilter zur Vermeidung von unerwünschten Wasseransammlungen in gleichem Umfang wie der Kraftstofffilter 5 über eine weitere Saugaufladungsleitung von der Druckseite in Richtung der Saugseite der Hochdruckpumpe mit Kraftstoff gespült werden.

In Abhängigkeit des jeweils vorliegenden Anwendungsfalles besteht auch die Möglichkeit, dass die Förderpumpe 4 selbst als eine solche Hochdruckpumpe ausgebildet ist und das Kraftstoffsystem 1 lediglich mit einer Förderpumpe ausgebildet ist.

### Bezugszeichenliste

- 1: Kraftstoffsystem
- 2: Kraftstoffleitung
- 3: Kraftstofftank
- 4: Förderpumpe
- 5: Kraftstofffilter
- 6: Druckseite der Förderpumpe 4
- 7: Brennkammer
- 8: Rücklaufleitung
- 9: Rücklaufbehälter
- 10: Ventileinheit
- 11: Saugaufladungsleitung
- 12: Saugseite der Förderpumpe 4
- 13: Entleereinheit
- 14: Strahlpumpe
- 15: Entleerleitung
- 16: Schwimmerelement
- 17: Rückschlagventil
- 18: Innenraum des Filtergehäuses
- 19: Filtergehäuse
- 20: unterer Bereich des Filtergehäuses
- 20A: Deckelelement
- 21: Öffnung des Filtergehäuses
- 22: Rückhalteeinheit
- 23: Schmutzpartikel
- 24: Prallwand
- 24A: Prallwand
- 25: Filterelement
- 25A: Filterelement
- 26: Seitenwand des Kraftstofffilters
- 27: Filtermedium
- 28: Pfeil
- 29: Pfeil
- 30: weiteres Filtermedium
- 31: Ablassschraube
- WSmax: maximaler Wasserfüllstand

## Patentansprüche

1. Kraftstoffsystem (1) für ein Gasturbinentriebwerk, insbesondere für ein Flugtriebwerk, mit einer Kraftstoffleitung (2), die einen Kraftstofftank (3) mit wenigstens einer Förderpumpe (4) und mit einem Kraftstofffilter (5), der stromab der Förderpumpe (4) angeordnet mit einer Druckseite (6) der Förderpumpe (4) verbunden ist, sowie mit einer Brennkammer (7) verbindet, die stromab des Kraftstofffilters (5) mit der Kraftstoffleitung (2) verbunden ist, und mit einer Rücklaufleitung (8), die von der Brennkammer (7) in Richtung eines Rücklaufbehälters (9) abzweigt, und mit einer Saugaufladungsleitung (11), die die Druckseite (6) der Förderpumpe (4) mit einer Saugseite (12) der Förderpumpe (4) verbindet, wobei der Rücklaufbehälter (9) über eine Entleereinheit (13) mit der Saugaufladungsleitung (11) in Wirkverbindung steht, wobei die Entleereinheit (13) dazu eingerichtet ist, Kraftstoff aus dem Rücklaufbehälter (9) in die Saugaufladungsleitung (11) zu führen,
**dadurch gekennzeichnet, dass**
die Saugaufladungsleitung (11) vom Kraftstofffilter (5) in Richtung der Saugseite (12) der Förderpumpe (4) abzweigt und Kraftstoff aus einem Innenraum (18) eines Filtergehäuses (19) des Kraftstofffilters (5) in die Saugaufladungsleitung (11) einleitbar ist.

2. Kraftstoffsystem nach Anspruch 1, **dadurch gekennzeichnet, dass** die Saugaufladungsleitung (11) in Einbaulage des Kraftstofffilters (5) von einem unteren Bereich (20) des Filtergehäuses (18) abzweigt.

3. Kraftstoffsystem nach Anspruch 2, **dadurch gekennzeichnet, dass** die Saugaufladungsleitung (11) durch ein unteres Deckelement (20A) des unteren Bereiches (20) hindurch mit dem Innenraum (18) des Filtergehäuses (19) in Verbindung steht.

4. Kraftstoffsystem nach Anspruch 1 oder 2, **dadurch gekennzeichnet, dass** die Saugaufladungsleitung (11) durch eine Seitenwand (26) des Kraftstofffilters (5) hindurch mit dem Innenraum (18) des Filtergehäuses (19) in Verbindung steht.

5. Kraftstoffsystem nach einem der vorstehenden Ansprüche, **dadurch gekennzeichnet, dass** stromauf einer Öffnung (21) des Filtergehäuses (19), die den Innenraum (18) des Filtergehäuses (19) und die Saugaufladungsleitung (11) verbindet, eine Rückhalteeinheit (22) angeordnet ist, in deren Bereich Schmutzpartikel (23) im Filtergehäuse (19) zurückgehalten werden.

6. Kraftstoffsystem nach Anspruch 5, **dadurch gekennzeichnet, dass** die Rückhalteeinrichtung (22) eine Prallwand (24; 24A) umfasst, die im Strömungsweg zwischen dem Innenraum (18) des Filtergehäuses (19) und der Saugaufladungsleitung (11) sowie stromauf der Öffnung (21) des Filtergehäuses (19) angeordnet ist.

7. Kraftstoffsystem nach Anspruch 5 oder 6, **dadurch gekennzeichnet, dass** die Rückhalteeinrichtung (22) ein Filterelement (25; 25A) umfasst, das im Bereich der Öffnung (21) des Filtergehäuses (19) angeordnet ist.

8. Kraftstoffsystem nach einem der vorstehenden Ansprüche, **dadurch gekennzeichnet, dass** im Rücklaufbehälter (9) ein Schwimmerelement (16) der Entleereinheit (13) angeordnet ist, das eine den Rücklaufbehälter (9) mit der Saugaufladungsleitung (11) verbindende Entleerleitung (15) unterhalb eines definierten Kraftstoff-Füllstandes des Rücklaufbehälters (9) sperrt.

9. Kraftstoffsystem nach Anspruch 8, **dadurch gekennzeichnet, dass** in der Saugaufladungsleitung (11) eine Strahlpumpe (14) der Entleereinheit (13) angeordnet ist, die über eine Entleerleitung (15) mit dem Rücklaufbehälter (9) in Verbindung steht, wobei der Kraftstoff, der im Betrieb des Kraftstoffsystems (1) durch die Saugaufladungsleitung (11) geführt wird, das Treibmedium der Strahlpumpe (14) und der im Rücklaufbehälter (9) gespeicherte Kraftstoff das Saugmedium der Strahlpumpe (14) bildet.

10. Kraftstoffsystem nach Anspruch 8 oder 9, **dadurch gekennzeichnet, dass** die Entleereinheit (13) ein Rückschlagventil (17) aufweist, dass die Verbindung zwischen dem Rücklaufbehälter (9) und der Strahlpumpe (14) sperrt, wenn der Druck im Rücklaufbehälter (9) den Saugdruck der Strahlpumpe (14) unterschreitet.

11. Kraftstoffsystem nach einem der vorstehenden Ansprüche, **dadurch gekennzeichnet, dass** die Rücklaufleitung (8) in einem der Brennkammer (7) nahen Leitungsbereich eine Ventileinheit (10) aufweist, über die eine Verbindung zwischen der Brennkammer (7) und dem Rücklaufbehälter (9) schaltbar ist.

12. Gasturbinentriebwerk, das mit einem Kraftstoffsystem (1) gemäß einem der Ansprüche 1 bis 11 ausgeführt ist.
